# EUROPEAN PATENT SPECIFICATION

(11) **EP 4 395 082 B1**
(45) Date of publication and mention of the grant of the patent: **15.04.2026**
(21) Application number: 22860573.9
(22) Date of filing: 25.08.2022
(51) Int. Cl.: H01R 13/631, H01R 13/40, B60L 53/16

(54) **SELF-ADJUSTING CENTERING TERMINAL MOUNTING STRUCTURE**
SELBSTEINSTELLENDE ZENTRIERENDE ANSCHLUSSMONTAGESTRUKTUR
STRUCTURE DE MONTAGE DE BORNE DE CENTRAGE À RÉGLAGE AUTOMATIQUE

(30) Priority: 26.08.2021 CN 202122029997 U
(43) Date of publication of application: 03.07.2024
(73) Proprietor: Changchun Jetty Automotive Technology Co., Ltd., Changchun, Jilin 130000 (CN)
(72) Inventor: WANG, Chao, Changchun, Jilin 130000 (CN)
(74) Representative: Boult Wade Tennant LLP
(86) International application number: PCT/CN2022/114697
(87) International publication number: WO 2023/025227

(56) References cited:
- EP-A1- 0 449 570
- CN-A- 102 769 223
- CN-A- 102 769 223
- CN-U- 208 444 990
- CN-U- 208 444 990
- CN-U- 215 816 490
- US-A1- 2005 136 755
- US-A1- 2005 136 755
- US-B1- 6 699 054

## Description

### RELATED APPLICATION

The present disclosure claims priority to Chinese Utility Model Patent Application No. 202122029997.1, entitled 'self-adjusting centering terminal mounting structure', and filed on August 26, 2021.

### TECHNICAL FIELD

The present disclosure relates to the technical field of electrical connections, and particularly to a self-adjusting centering terminal mounting structure.

### BACKGROUND

At present, a charging gun head and a charging stand of a new energy automobile have conductive terminals of a plugged structure. The conductive terminal is fixed on a terminal clamping seat of the charging gun head or the charging stand. In previous designs, the conductive terminal is usually mounted in a tight fit or small clearance fit with the terminal clamping seat to fix the conductive terminal, so that the conductive terminal would not shake and move.

However, since there are errors in product production and assembly, and the charging gun head and the charging stand are even not produced by the same manufacturer, when the charging gun head and the charging stand are plugged and matched, the axes of the plugging terminals will be deviated from each other, resulting in failure or difficulty in the plugging. Even being plugged forcibly, the conductive terminal will be deviated in the terminal clamping seat, and its plugging with any other terminal will also be poor, which is called 'failure infection'. When poorness is 'infected' to the originally good charging stand or charging gun head, the contact resistance in the contact area increases and the temperature rise of the automobile is excessive, resulting in risks such as fire, so there are great potential safety hazards. In addition, the 'failure infection' will cause butterfly effect, resulting in more and more accidents and potential safety hazards. Therefore, a new solution is urgently needed to solve the above problems in the existing field of electrical connections. An electrical connector is known from the prior art, for example from US20050136755A1. A socket connector is known from the prior art, for example from CN102769223A. An automotive charging socket and an automobile are known from the prior art, for example from CN208444990U.

### SUMMARY

In order to enable terminals of a plugged structure to be coaxially connected, the present disclosure provides a self-adjusting centering terminal mounting structure, which can realize automatic centering adjustment between the terminals of a plugged structure, thereby not only adapting to plugging and unplugging of different charging stands or charging gun heads, but also avoiding the spread of 'failure infection'. The present invention is set out in the appended set of claims. Any references to inventions or embodiments not falling within the scope of the independent claims are to be interpreted as examples useful for understanding the invention.

The present disclosure adopts the following technical solution to solve its technical problem:

A self-adjusting centering terminal mounting structure, including a conductive terminal and a terminal clamping seat. The conductive terminal includes a fixed section, the fixed section is externally provided with a clamping groove 14, the terminal clamping seat is internally provided with a mounting hole 21, the clamping groove of the conductive terminal is disposed in the mounting hole, and a mounting clearance is formed between the clamping groove and the mounting hole; wherein the terminal clamping seat comprises a mounting panel arranged perpendicular to an axial direction of the conductive terminal, and the mounting hole is located on the mounting panel; and wherein a passage is disposed between an edge of the mounting panel and the mounting hole and is disposed on the mounting panel, and the clamping groove of the conductive terminal is capable of entering the mounting hole via the passage; or, the mounting panel is provided with a preset hole and a passage, the preset hole is in communication with the mounting hole through the passage, a diameter of the preset hole is greater than a maximum diameter of the conductive terminal, and the clamping groove of the conductive terminal is capable of firstly entering the preset hole and then entering the mounting hole through the passage; the mounting panel is provided with a notch which is in communication with the mounting hole, and the notch and the passage are located on two sides of the mounting hole respectively.

The present disclosure has the advantageous effects that the self-adjusting centering terminal mounting structure can realize automatic centering adjustment between terminals of a plugged structure through the mounting clearance between the clamping groove and the mounting hole, thereby not only adapting to plugging and unplugging of different charging stands or charging gun heads, but also avoiding the spread of 'failure infection'. In addition, the manufacturing accuracy of the charging gun head and the charging stand can be reduced.

### BRIEF DESCRIPTION OF DRAWINGS

The drawings, which constitute a part of the present disclosure, are used to provide a further understanding of the present disclosure, and the illustrative embodiments of the present disclosure and the descriptions thereof are used to explain the present disclosure, and do not constitute undue limitations thereto.
FIG. 1 illustrates a perspective view of a self-adjusting centering terminal mounting structure according to the present disclosure.
FIG. 2 illustrates a radial cross-sectional view of a self-adjusting centering terminal mounting structure according to the present disclosure.
FIG. 3 illustrates an axial cross-sectional view of a self-adjusting centering terminal mounting structure according to the present disclosure.
FIG. 4 illustrates an enlarged view of a mounting clearance in FIG. 3.
FIG. 5 illustrates a schematic diagram of a preset hole of a self-adjusting centering terminal mounting structure according to the present disclosure.

1: conductive terminal; 2: terminal clamping seat; 3: mounting clearance; 4: preset hole; 12: fixed section; 14: clamping groove; 21: mounting hole; 22: mounting panel; 23: reinforcing rib; 24: passage; 25: notch; 31: radial clearance; 32: axial clearance; 141: clamping-groove bottom circumferential surface; 142: clamping-groove side surface; 213: mounting-hole top peripheral surface; 214: mounting-hole side surface.

### DETAILED DESCRIPTION OF EMBODIMENTS

It should be noted that the embodiments in the present disclosure and the features in the embodiments can be combined with each other without conflict. The present disclosure will be described in detail with reference to the drawings and the embodiments.

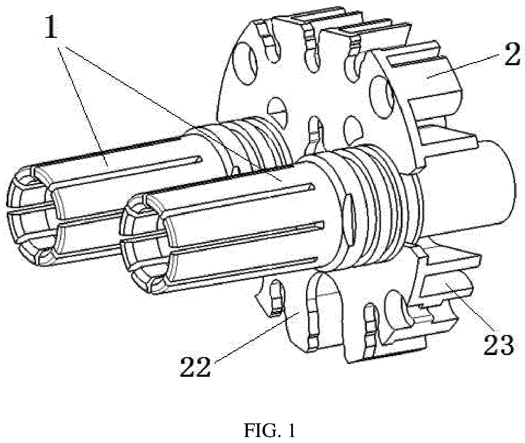

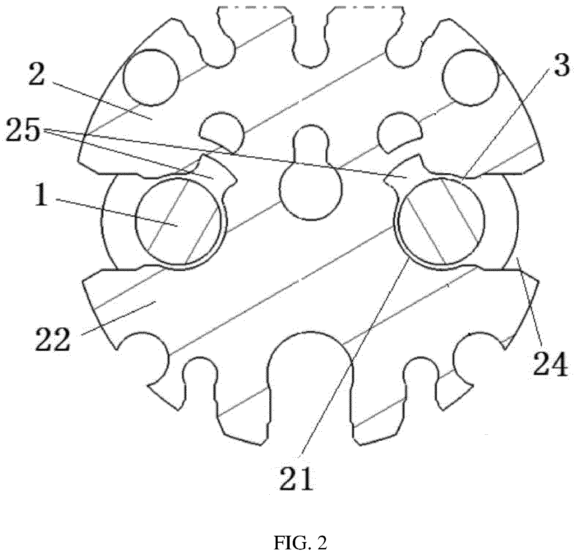

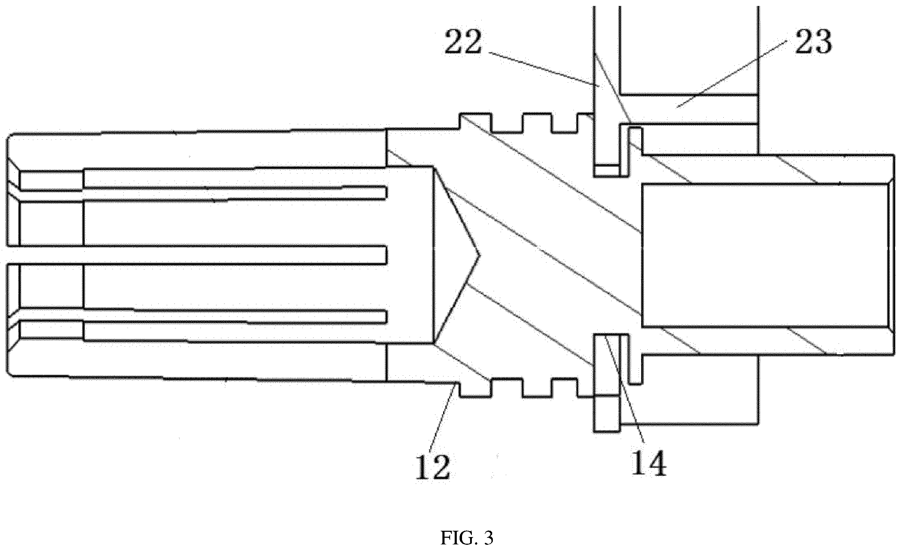

A self-adjusting centering terminal mounting structure, including a conductive terminal 1 and a terminal clamping seat 2. The conductive terminal 1 includes a fixed section 12, and the fixed section 12 is externally provided with a clamping groove 14. The terminal clamping seat 2 is internally provided with a mounting hole 21. The clamping groove 14 of the conductive terminal 1 is disposed in the mounting hole 21, and a mounting clearance 3 is formed between the clamping groove 14 and the mounting hole 21, as illustrated in FIGS. 1 to 4.

Since there is a large mounting clearance 3 between the clamping groove 14 and the mounting hole 21, the conductive terminal 1 can move freely in a certain range along an axial direction and a radial direction of the mounting hole 21, so that each pair of terminals of the plugged structure can be plugged coaxially, which realizes automatic centering adjustment between the conductive terminals 1 of a plugged structure, thereby not only adapting to plugging and unplugging of different charging stands or charging gun heads, but also avoiding the spread of 'failure infection'.

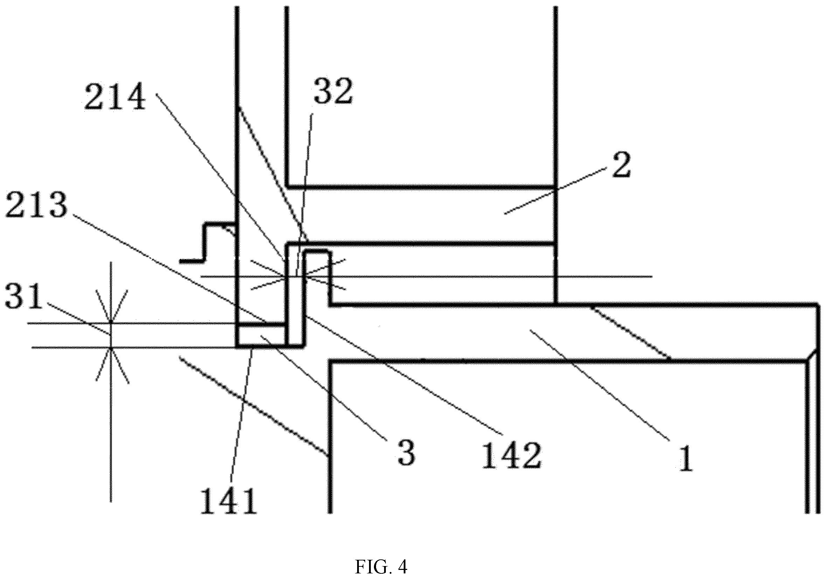

In this embodiment, the mounting clearance 3 includes a radial clearance 31, which may be in a range of 0.3 mm to 3.7 mm, and the conductive terminal 1 is movable in its radial direction within the radial clearance 31. The mounting clearance 3 also includes an axial clearance 32, which may be in a range of 0.4 mm to 12.3 mm, and the conductive terminal 1 is movable in its axial direction within the axial clearance 32, as illustrated in FIG. 4. Of course, the sizes of the radial clearance 31 and the axial clearance 32 may also be determined as required.

The radial direction of the conductive terminal 1 is an up-and-down direction in FIG. 4, and the axial direction thereof is a left-and-right direction in FIG. 4. The clamping groove 14 of the conductive terminal 1 includes a clamping-groove bottom peripheral surface 141 and two clamping-groove side surfaces 142. The mounting hole 21 of the terminal clamping seat 2 includes a mounting-hole top peripheral surface 213 and two mounting-hole side surfaces 214.

Specifically, the radial clearance 31 is a distance, when one side of the clamping-groove bottom peripheral surface 141 is close to one side of the mounting-hole top peripheral surface 213, between the other side of the clamping-groove bottom peripheral surface 141 and the other side of the mounting-hole top peripheral surface 213; the axial clearance 32 is a maximum distance between one clamping-groove side surface 142 and the mounting-hole side surface 214 adjacent thereto.

The radial clearance 31 and the axial clearance 32 are provided to allow the conductive terminal 1 to have a space for angle adjustment and point at different angles. However, if the angle is too large, the conductive terminal 1 will touch other parts of the charging stand and cause bumping, resulting in damage to the conductive terminal 1 or other parts.

Therefore, the inventor uses different radial clearances 31 and axial clearances 32 to repeatedly test and observe which combinations of the radial clearance 31 and the axial clearance 32 would cause the conductive terminal 1 to touch other components. The inventor selects ten conductive terminals 1 with the same diameter for tests, sets different radial clearances 31 and axial clearances 32 to match the same mounting hole 21, observes whether the conductive terminals 1 touch other devices, and records the results. The test results are shown in Table 1.

In this embodiment, it is ideal that the conductive terminals 1 do not touch other devices.

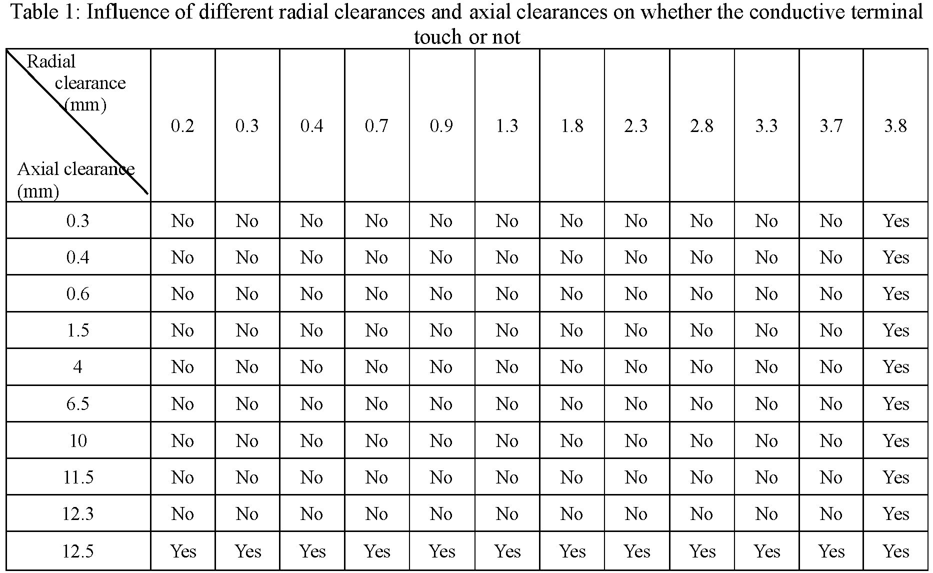

As can be seen from Table 1, if the radial clearance 31 is greater than 3.7 mm, the conductive terminal 1 will touch other components of the charging stand regardless of the axial clearance, so 3.7 mm is the maximum value of the radial clearance 31; and if the axial clearance 32 is greater than 12.3 mm, the conductive terminal 1 will touch other components of the charging stand regardless of the radial clearance, so 12.3 mm is the maximum value of the axial clearance 32. However, if the radial clearance 31 is less than 0.3 mm or the axial clearance is less than 0.4 mm, the centering amount of the conductive terminal 1 is too small to have practical application significance. Therefore, the inventor selects the radial clearance 31 of 0.3 mm to 3.7 mm and the axial clearance 32 of 0.4 mm to 12.3 mm as a preferable choice. The above ranges have the following advantages: it can ensure the effectiveness of product centering, improve the service life of the terminals, and reduce the contact resistance to avoid the risks of an excessive temperature rise and a fire caused by mis-centering. Meanwhile, the inventor finds in practical works that if the radial clearance 31 or the axial clearance 32 is too small, the mounting is difficult, and the plating layer on the conductive terminal 1 may be easily scraped off during the mounting. However, if the clearance is too large, the conductive terminal 1 will easily have more impacts with the terminal clamping seat 2, so the inventor selects the radial clearance 31 of 0.5 mm to 2 mm and the axial clearance 32 of 1 mm to 8 mm as a more preferable choice.

Meanwhile, in order to verify the influence of different radial clearances 31 and axial clearances 32 on the 'failure infection' of the conductive terminal 1, the inventor conducts relevant tests. The test method is to select ten groups of charging stands, set different combinations of radial clearances 31 and axial clearances 32 respectively, then plug the ten groups of charging stands with ten groups of brand-new mating charging gun heads respectively, and observe whether the terminals of the charging gun heads have the phenomenon of 'failure infection', which is manifested as that the connection between the terminals is too tight or the plating layer on the terminal surface is scraped off. If there is a 'failure infection' phenomenon, it is considered as unqualified.

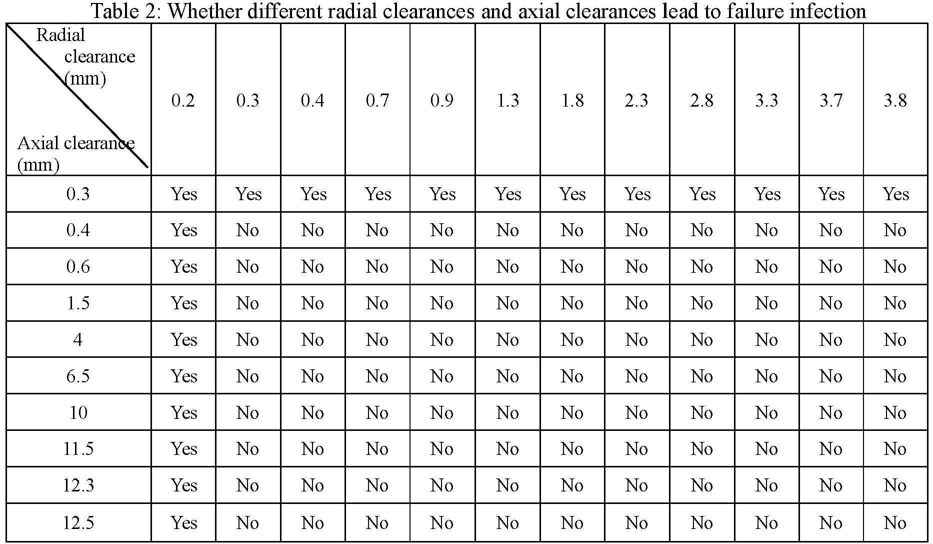

As shown in Table 2, if the axial clearance 32 is less than 0.4mm, the 'failure infection' occurs regardless of the radial clearance 31, because the space for moving in the axial direction is too small, which is manifested as that the connection is too tight or even the plating layer on the surface of the movable test terminal is scraped off, thereby affecting the normal use. Similarly, the inventor finds that if the radial clearance is less than 0.3 mm, the 'failure infection' occurs regardless of the axial clearance, because the space for moving in the radial direction is too small, which is also manifested as that the connection is too tight or even the plating layer on the surface of the movable test terminal is scraped off, thereby affecting the normal use. Therefore, in combination with Table 1, the inventor selects the radial clearance 31 of 0.3 mm to 3.7 mm and the axial clearance 32 of 0.4 mm to 12.3 mm as a preferable choice.

Meanwhile, the inventor also tests the centering effect. The test method is to take several brand-new charging stands of the same specification, each having two mating terminals; the inventor selects the conductive terminals 1 with different combinations of the axial clearances 32 and the radial clearances 31 to be respectively plugged with 100 charging stands, and if the plugging is successful at one time, it is considered as qualified. The one-time plugging success rate of each combination with 100 charging stands is recorded, and the success rate reaching 95% is qualified. The results are shown in Table 3.

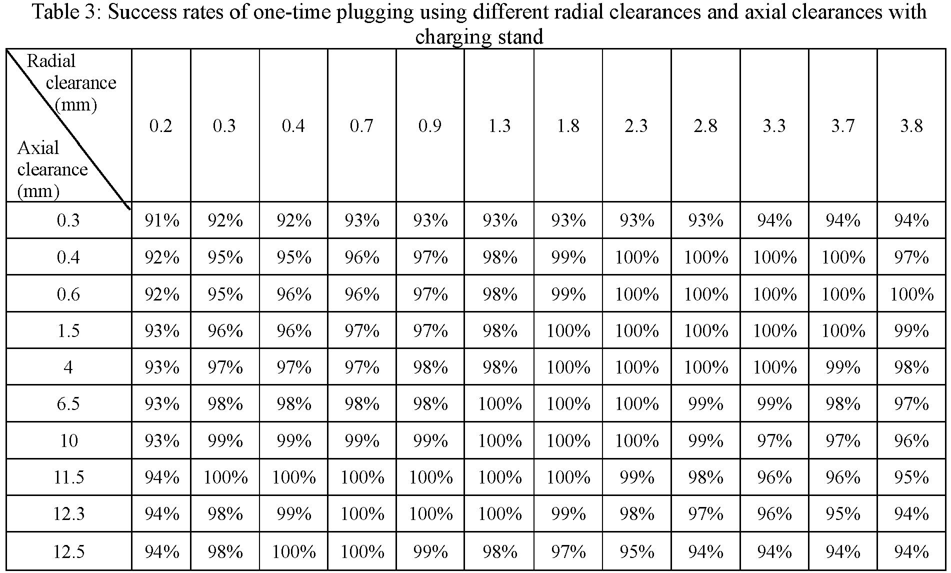

As can be seen from Table 3, if the axial clearance 32 is less than 0.4 mm, the centering success rate cannot reach the qualified level of 95% regardless of the radial clearance 31; and if the radial clearance 31 is less than 0.3 mm, the centering success rate cannot reach the qualified level of 95% regardless of the axial clearance 32. Meanwhile, if the radial clearance 31 is greater than 3.8 mm or the axial clearance 32 is greater than 12.3 mm, the plugging success rate is also less than 95% due to the excessive swing of the conductive terminal 1. Therefore, in combination with Table 1, the inventor selects the radial clearance 31 of 0.3 mm to 3.7 mm and the axial clearance 32 of 0.4 mm to 12.3 mm as a preferable choice.

In this embodiment, an elastic soft rubber ring of solid or hollow structure may also be provided between the clamping groove 14 and the mounting hole 21. The elastic soft rubber ring has a concave cross-section, and is matched and sleeved between the clamping groove 14 of the conductive terminal 1 and the mounting hole 21 of the terminal clamping seat 2. The elastic soft rubber ring may be made of existing rubber, and can prevent the conductive terminal 1 from accidentally falling off the terminal clamping seat 2, and also play a buffering role when the conductive terminal 1 is plugged into the mounting hole 21, so as to reduce the impact of the conductive terminal 1 on the terminal clamping seat 2.

In this embodiment, the terminal clamping seat 2 includes a mounting panel 22 on which the mounting hole 21 is located. For example, the mounting panel 22 may be provided with two or three mounting holes 21. Accordingly, the self-adjusting centering terminal mounting structure includes two or three conductive terminals 1, which are plugged into the mounting holes 21 on a one-to-one basis.

In this embodiment, the terminal clamping seat 2 further includes reinforcing ribs 23, which are located around the mounting hole 21 and disposed perpendicular to the mounting panel 22. In this embodiment, the reinforcing ribs 23 are used to enhance the strength of the part of the mounting panel 22 at the mounting hole 21. The reinforcing ribs 23 are located at the back of the mounting panel 22 and around the mounting hole 21, and have arc-shaped cross-sections.

In this embodiment, for the convenience of mounting, a passage 24 is provided between an edge of the mounting panel 22 and the mounting hole 21, and the clamping groove 14 of the conductive terminal 1 can enter the mounting hole 21 via the passage 24 that may be referred to as a first passage. A width of the passage 24 is smaller than a diameter of the mounting hole 21.

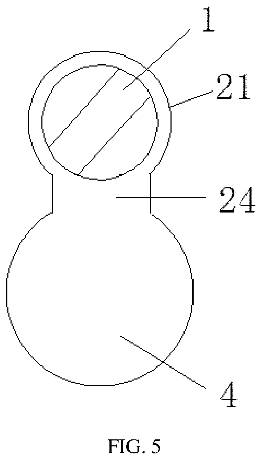

In an exemplary embodiment, the mounting panel 22 further includes a preset hole 4 and a passage 24 that may be referred to as a second passage. As illustrated in FIG. 5, the preset hole 4 is in communication with the mounting hole 21 through the passage 24, and a diameter of the preset hole 4 is greater than a maximum cross-sectional diameter of the conductive terminal 1. If the mounting hole 21 is not disposed at the edge of the terminal clamping seat 2, the conductive terminal 1 cannot be pushed into the mounting hole 21 from the lateral side of the terminal clamping seat 2. In this case, the conductive terminal 1 may be inserted into the preset hole 4 from above or below the terminal clamping seat 2, and then the clamping groove 14 may enter the mounting hole 21 through the passage 24 to complete the mounting of the conductive terminal 1. Both or one of the first passage and the second passage may be existed provided.

In an exemplary embodiment, a ratio of a minimum width of the passage 24 to a minimum diameter of the clamping groove 14 (i.e., a diameter of the clamping groove 14 at the clamping-groove bottom peripheral surface 141) is 93% to 98.5%. That is, the width of the passage 24 is smaller than the radial cross-sectional diameter of the clamping groove 14, so that the conductive terminal 1 will not fall off the mounting hole 21 when the conductive terminal 1 is assembled with the terminal clamping seat 2. However, if the passage 24 is too narrow, the assembly is difficult. In order to verify the influence of the ratio of the minimum width of the passage 24 to the minimum diameter of the clamping groove 14 on the assembly effect, the inventor conducts relevant experiments. The experiment method is to push the conductive terminal 1 to make it clamp with the terminal clamping seat 2 from the passage 24 using a pushing force of 50 N; if the conductive terminal 1 can be pushed into the terminal clamping seat 2, it is considered as qualified, and otherwise unqualified; the terminal clamping seat 2 after plugging is subjected to a shaking experiment with a frequency of 8 Hz, which is similar to the driving environment, for a duration of 2 minutes, and if the conductive terminal 1 falls off the mounting hole 21, it is considered as unqualified, and otherwise qualified. The experiment results are shown in Table 4.

**Table 4: Influence of a ratio of the minimum width of the passage to the minimum diameter of the clamping groove on the assembly**

| | | | | | | | | | | |
|---|---|---|---|---|---|---|---|---|---|---|
| Ratio (%) | 91% | 92% | 93% | 94% | 95% | 96% | 97% | 98% | 98.5% | 99% |
| Whether pushed into | No | No | Yes | Yes | Yes | Yes | Yes | Yes | Yes | Yes |
| Whether fall off | No | No | No | No | No | No | No | No | No | Yes |

As can be seen from Table 4, if the ratio of the minimum width of the passage 24 to the radial cross-sectional diameter of the clamping groove 14 is less than 93%, the assembly cannot be done under the pushing force of 50 N, because the minimum width of the passage 24 is much smaller than the radial cross-sectional diameter of the clamping groove. Therefore, the inventor selects the ratio of the minimum width of the passage 24 to the diameter of the clamping groove 14 being at least 93%. As also can be seen from Table 2, if the ratio of the minimum width of the passage 24 to the radial cross-sectional diameter of the clamping groove 14 is greater than 98.5%, the conductive terminal 1 will fall off the mounting hole 21 in the vibration experiment, which cannot meet the actual working requirement, so the inventor selects the ratio of the minimum width of the passage 24 to the radial cross-sectional diameter of the clamping groove 14 being 93% to 98.5%. Specifically, the ratio may be 98%, 97.5%, 97%, 96%, 95% or the like. In a specific embodiment, the radial cross-sectional diameter of the clamping groove 14 is 8 mm, and the minimum width of the passage 24 is 7.8 mm.

In this embodiment, the mounting panel 22 is provided with a notch 25, which is in communication with the mounting hole 21, and the notch 25 and the passage 24 are located on two sides of the mounting hole 21 respectively. The notch enables the passage 24 to maintain a resilience. When the conductive terminal 1 passes through the passage 24, both sides of the passage 24 are squeezed and more likely to be deformed due to the notch 25, thereby ensuring that the conductive terminal 1 can more easily enter the mounting hole 21.

In this embodiment, an assembly force between the clamping groove 14 and the passage 24 is 6 N to 55 N. In order to plug the conductive terminal 1 into the mounting hole 21 of the terminal clamping seat 2, a certain assembly force is required. If the assembly force is too small, the conductive terminal 1 cannot be plugged, and if the assembly force is too large, the conductive terminal 1 or the terminal clamping seat 2 will be easily damaged. In order to verify the influence of the assembly force between the clamping groove 14 and the passage 24 on the plugging effect, the inventor conducts relevant experiments. The experiment method is to select the same conductive terminals 1 and the same terminal clamping seats 2, and plugs the conductive terminal 1 into the terminal clamping seat 2 with different forces. It is considered as qualified if the plugging is smooth without damaging the conductive terminal 1 or the terminal clamping seat 2, and otherwise unqualified. The experimental results are shown in Table 5.

**Table 5: Influence of different assembly forces between the clamping groove and the passage on the plugging effect**

| | | | | | | | | | | | | |
|---|---|---|---|---|---|---|---|---|---|---|---|---|
| Plugging force (N) | 5 | 6 | 7 | 8 | 10 | 20 | 30 | 40 | 48 | 52 | 55 | 60 |
| Whether plugged into | No | Yes | Yes | Yes | Yes | Yes | Yes | Yes | Yes | Yes | Yes | Yes |
| Whether damaged | No | No | No | No | No | No | No | No | No | No | No | Yes |

As can be seen from Table 5, if the assembly force is less than 6 N, the conductive terminal 1 cannot be plugged into the terminal clamping seat 2. Therefore, the inventor selects the minimum assembly force to be 6 N. If the assembly force is greater than 55 N, the conductive terminal 1 is damaged, which is manifested in scratches in the clamping groove 14. Therefore, the inventor selects the assembly force between the clamping groove 14 and the passage 24 to be 6 N to 55 N. The specific plugging force may be 8 N, 10 N, 15 N, 25 N, etc.

In this embodiment, the material of the mounting panel 22 has an impact strength of 115 MPa to 1300 MPa. The impact strength is used to evaluate the impact resistance of a material or to judge the brittleness and toughness of the material, so the impact strength is also called impact toughness. The impact strength can directly reflect the impact resistance of the material. In this embodiment, if the impact strength of the mounting panel 22 is too small, the conductive terminal 1 will damage the terminal clamping seat 2 when being plugged into the terminal clamping seat 2, and if the impact strength of the mounting panel 22 is too large, the terminal clamping seat 2 cannot be deformed and then cannot be plugged. In order to select a suitable material to make the mounting panel 22, the inventor conducts experiments. The experiment method is to select the same impact test environment and the mounting panels 22 of the same specification but different impact strengths, and use an external force of 55 N to carry out impact tests on the mounting panels. It is considered as qualified if the mounting panel is not deformed after the impact, and otherwise unqualified. The results are shown in Table 6.

**Table 6: Influence of mounting panels made of materials with different impact strengths on the plugging effect**

| | | | | | | | | | | | | |
|---|---|---|---|---|---|---|---|---|---|---|---|---|
| Impact strength (MPa) | 110 | 115 | 130 | 150 | 200 | 400 | 650 | 800 | 100 | 1200 | 1300 | 1350 |
| Whether deformed | Yes | No | No | No | No | No | No | No | No | No | No | No |

As can be seen from Table 6, if the impact strength of the material of the mounting panel 22 is less than 115 MPa, the mounting panel 22 is deformed in the impact experiments, and a long-term use of the mounting panel made of the material with such impact strength will inevitably lead to the damage of the mounting panel 22 and further lead to the failure of the charging device. Thus, the inventor selects the minimum impact strength of the material of the mounting panel 22 to be 115 MPa. If the impact strength of the material is greater than 1300 MPa, material selection and processing of the mounting panel 22 are very difficult, and it is not easy to plug the conductive terminal 1 into the mounting panel 22. Therefore, the inventor prefers that the impact strength of the material of the mounting panel 22 is 115 MPa to 1300 MPa, and specifically, 120 MPa, 130 MPa, 140 MPa, 150 MPa, 300 MPa, 450 MPa, etc.

The mounting and working processes of the self-adjusting centering terminal mounting structure are introduced below.

The clamping groove 14 of the conductive terminal 1 is disposed in the mounting hole 21, with a preset mounting clearance 3 formed therebetween, and the self-adjusting centering terminal mounting structure is mounted in the charging stand. The terminal in the charging gun head is correspondingly plugged with the conductive terminal 1 that is freely movable in a certain range along the axial direction and radial direction of the mounting hole 21 to adjust the position, so that the axes of each pair of corresponding terminal and conductive terminal 1 are coincident.

The clamping groove 14 of the conductive terminal 1 is disposed in the mounting hole 21, with a preset mounting clearance 3 formed therebetween, and the self-adjusting centering terminal mounting structure is mounted in the charging gun head. The terminal in the charging stand is correspondingly plugged with the conductive terminal 1 that is freely movable in a certain range along the axial direction and radial direction of the mounting hole 21 to adjust the position, so that the axes of each pair of corresponding terminal and conductive terminal 1 are coincident.

## Claims

1. A self-adjusting centering terminal mounting structure, comprising a conductive terminal (1) and a terminal clamping seat (2), wherein the conductive terminal (1) comprises a fixed section (12), the fixed section (12) is externally provided with a clamping groove (14), the terminal clamping seat (2) is internally provided with a mounting hole (21), the clamping groove (14) of the conductive terminal (1) is disposed in the mounting hole (21), and a mounting clearance (3) is formed between the clamping groove (14) and the mounting hole (21);
wherein the terminal clamping seat (2) comprises a mounting panel (22) arranged perpendicular to an axial direction of the conductive terminal (1), and the mounting hole (21) is located on the mounting panel (22);
**characterized in that**
a passage (24) is disposed between an edge of the mounting panel (22) and the mounting hole (21) and is disposed on the mounting panel (22), and the clamping groove (14) of the conductive terminal (1) is capable of entering the mounting hole (21) via the passage (24); or, the mounting panel (22) is provided with a preset hole (4) and a passage (24), the preset hole (4) is in communication with the mounting hole (21) through the passage (24), a diameter of the preset hole (4) is greater than a maximum diameter of the conductive terminal (1), and the clamping groove (14) of the conductive terminal (1) is capable of firstly entering the preset hole (4) and then entering the mounting hole (21) through the passage (24);
the mounting panel (22) is provided with a notch (25) which is in communication with the mounting hole (21), and the notch (25) and the passage (24) are located on two sides of the mounting hole (21) respectively.

2. The self-adjusting centering terminal mounting structure according to claim 1, wherein the mounting clearance (3) comprises a radial clearance (31) which is in a range of 0.3 mm to 3.7 mm, and the conductive terminal (1) is movable in its radial direction within the range of the radial clearance (31).

3. The self-adjusting centering terminal mounting structure according to claim 1, wherein the mounting clearance (3) comprises an axial clearance (32) which is in a range of 0.4 mm to 12.3 mm, and the conductive terminal (1) is movable in its axial direction within the range of the axial clearance (32).

4. The self-adjusting and centering terminal mounting structure according to claim 1, wherein the terminal clamping seat (2) further comprises reinforcing ribs (23), which are located around the mounting hole (21) and disposed perpendicular to the mounting panel (22).

5. The self-adjusting centering terminal mounting structure according to claim 1, wherein a ratio of a minimum width of the passage (24) to a minimum diameter of the clamping groove (14) is 93% to 98.5%.

6. The self-adjusting centering terminal mounting structure according to claim 1, wherein an assembly force between the clamping groove (14) and the passage (24) is 6 N to 55 N.

7. The self-adjusting centering terminal mounting structure according to claim 1, wherein an impact strength of a material of the mounting panel (22) is 115 MPa to 1300 MPa.

## Patentansprüche

1. Selbsteinstellende zentrierende Anschlussmontagestruktur, umfassend einen leitenden Anschluss (1) und einen Klemmsitz (2) des Anschlusses, wobei der leitende Anschluss (1) einen festen Teil (12) umfasst, der feste Teil (12) außen mit einer Klemmnut (14) versehen ist, der Klemmsitz (2) des Anschlusses innen mit einem Montageloch (21) versehen ist, die Klemmnut (14) des leitenden Anschlusses (1) in dem Montageloch (21) angebracht ist, und zwischen der Klemmnut (14) und dem Montageloch (21) ein Montagespiel (3) ausgebildet ist;
wobei der Klemmsitz (2) des Anschlusses eine Montageplatte (22) umfasst, welche senkrecht zu einer Axialrichtung des leitenden Anschlusses (1) angeordnet ist, und sich das Montageloch (21) auf der Montageplatte (22) befindet;
**dadurch gekennzeichnet, dass**
ein Kanal (24) zwischen einer Kante der Montageplatte (22) und dem Montageloch (21) angebracht ist und auf der Montageplatte (22) angebracht ist, und die Klemmnut (14) des leitenden Anschlusses (1) über den Kanal (24) in das Montageloch (21) eingeführt werden kann; oder die Montageplatte (22) mit einem vorgegebenen Loch (4) und einem Kanal (24) versehen ist, das vorgegebene Loch (4) über den Kanal (24) mit dem Montageloch (21) in Verbindung steht, ein Durchmesser des vorgegebenen Lochs (4) größer ist als ein maximaler Durchmesser des leitenden Anschlusses (1), und die Klemmnut (14) des leitenden Anschlusses (1) zuerst in das vorgegebene Loch (4) und dann über den Kanal (24) in das Montageloch (21) eingeführt werden kann;
die Montageplatte (22) mit einer Kerbe (25) versehen ist, welche mit dem Montageloch (21) in Verbindung steht, und die Kerbe (25) und der Kanal (24) sich jeweils auf zwei Seiten des Montagelochs (21) befinden.

2. Selbsteinstellende zentrierende Anschlussmontagestruktur nach Anspruch 1, wobei das Montagespiel (3) ein radiales Spiel (31) umfasst, welches in einem Bereich von 0,3 mm bis 3,7 mm liegt, und der leitende Anschluss (1) innerhalb des Bereichs des radialen Spiels (31) in ihrer radialen Richtung beweglich ist.

3. Selbsteinstellende zentrierende Anschlussmontagestruktur nach Anspruch 1, wobei das Montagespiel (3) ein axiales Spiel (32) umfasst, welches in einem Bereich von 0,4 mm bis 12,3 mm liegt, und der leitende Anschluss (1) innerhalb des Bereichs des axialen Spiels (32) in ihrer axialen Richtung beweglich ist.

4. Selbsteinstellende und zentrierende Anschlussmontagestruktur nach Anspruch 1, wobei der Klemmsitz (2) des Anschlusses weiter Verstärkungsrippen (23) umfasst, welche sich rund um das Montageloch (21) befinden und senkrecht zu der Montageplatte (22) angebracht sind.

5. Selbsteinstellende zentrierende Anschlussmontagestruktur nach Anspruch 1, wobei ein Verhältnis einer minimalen Breite des Kanals (24) zu einem minimalen Durchmesser der Klemmnut (14) 93 % bis 98,5 % beträgt.

6. Selbsteinstellende zentrierende Anschlussmontagestruktur nach Anspruch 1, wobei die Montagekraft zwischen der Klemmnut (14) und dem Kanal (24) 6 N bis 55 N beträgt.

7. Selbsteinstellende zentrierende Anschlussmontagestruktur nach Anspruch 1, wobei die Schlagfestigkeit eines Materials der Montageplatte (22) 115 MPa bis 1300 MPa beträgt.

## Revendications

1. Structure de montage de borne de centrage à réglage automatique, comprenant une borne conductrice (1) et un siège de serrage de borne (2), dans laquelle la borne conductrice (1) comprend une section fixe (12), la section fixe (12) est munie extérieurement d'une rainure de serrage (14), le siège de serrage de borne (2) est muni intérieurement d'un trou de montage (21), la rainure de serrage (14) de la borne conductrice (1) est disposée dans le trou de montage (21), et un jeu de montage (3) est formé entre la rainure de serrage (14) et le trou de montage (21) ;
dans lequel le siège de serrage de borne (2) comprend un panneau de montage (22) agencé perpendiculairement à une direction axiale de la borne conductrice (1), et le trou de montage (21) est situé sur le panneau de montage (22) ;
**caractérisé en ce que**
un passage (24) est disposé entre un bord du panneau de montage (22) et le trou de montage (21) et est disposé sur le panneau de montage (22), et la rainure de serrage (14) de la borne conductrice (1) est capable de pénétrer dans le trou de montage (21) via le passage (24) ; ou, le panneau de montage (22) est muni d'un trou pré-percé (4) et d'un passage (24), le trou pré-percé (4) est en communication avec le trou de montage (21) à travers le passage (24), un diamètre du trou pré-percé (4) est supérieur à un diamètre maximal de la borne conductrice (1), et la rainure de serrage (14) de la borne conductrice (1) est capable de pénétrer d'abord dans le trou pré-percé (4) puis dans le trou de montage (21) à travers le passage (24) ;
le panneau de montage (22) est muni d'une encoche (25) qui est en communication avec le trou de montage (21), et l'encoche (25) et le passage (24) sont situés respectivement de deux côtés du trou de montage (21).

2. Structure de montage de borne de centrage à réglage automatique selon la revendication 1, dans laquelle le jeu de montage (3) comprend un jeu radial (31) qui se situe dans une plage de 0,3 mm à 3,7 mm, et la borne conductrice (1) est mobile dans sa direction radiale dans la plage du jeu radial (31).

3. Structure de montage de borne de centrage à réglage automatique selon la revendication 1, dans laquelle le jeu de montage (3) comprend un jeu axial (32) qui se situe dans une plage de 0,4 mm à 12,3 mm, et la borne conductrice (1) est mobile dans sa direction axiale dans la plage du jeu axial (32).

4. Structure de montage de borne de centrage à réglage automatique selon la revendication 1, dans laquelle le siège de serrage du terminal (2) comprend en outre des nervures de renforcement (23), qui sont situées autour du trou de montage (21) et disposées perpendiculairement au panneau de montage (22).

5. Structure de montage de borne de centrage à réglage automatique selon la revendication 1, dans laquelle le rapport entre la largeur minimale du passage (24) et le diamètre minimal de la rainure de serrage (14) est de 93 % à 98,5 %.

6. Structure de montage de borne de centrage à réglage automatique selon la revendication 1, dans laquelle une force d'assemblage entre la rainure de serrage (14) et le passage (24) est de 6 N à 55 N.

7. Structure de montage de borne de centrage à réglage automatique selon la revendication 1, dans laquelle la résistance aux chocs d'un matériau du panneau de montage (22) est de 115 MPa à 1300 MPa.
